(19) Europäisches Patentamt
European Patent Office
Office européen des brevets

(11) **EP 2 270 451 B1**

(12) **EUROPÄISCHE PATENTSCHRIFT**

(45) Veröffentlichungstag und Bekanntmachung des Hinweises auf die Patenterteilung:
**30.05.2012 Patentblatt 2012/22**

(51) Int Cl.:
*G01J 3/50* *(2006.01)*     *G01J 3/10* *(2006.01)*
*G01J 3/02* *(2006.01)*

(21) Anmeldenummer: **09163637.3**

(22) Anmeldetag: **24.06.2009**

(54) **Farbmessgerät**

Colour measuring device

Appareil de mesure de couleur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**05.01.2011 Patentblatt 2011/01**

(73) Patentinhaber: **X-Rite Europe GmbH**
**8105 Regensdorf (CH)**

(72) Erfinder:
• **Frick, Beat**
**8107 Buchs (CH)**

• **Wegmüller, Mark**
**8046 Zürich (CH)**

(74) Vertreter: **Schwabe - Sandmair - Marx Patentanwälte**
**Stuntzstraße 16**
**81677 München (DE)**

(56) Entgegenhaltungen:
**EP-A- 1 262 749       EP-A- 1 694 047**
**EP-A- 1 707 928       EP-A1- 2 003 615**
**WO-A-99/67625       WO-A1-00/73737**
**US-A1- 2002 180 968   US-A1- 2007 103 564**

**Beschreibung**

Die Erfindung betrifft ein Farbmessgerät gemäss dem Oberbegriff des unabhängigen Anspruchs.

Bekannte Farbmessgeräte umfassen üblicherweise eine Beleuchtungsanordnung für das auszumessende Messobjekt, eine Aufpickanordnung zur Erfassung des vom Messobjekt zurückgestrahlten Messlichts und zur Umwandlung des erfassten Messlichts in entsprechende elektrische Signale und eine Elektronik zur Auswertung der elektrischen Signale und zur Steuerung der Funktionsabläufe des Messgeräts. Die Beleuchtungsanordnung kann weisses Licht erzeugen oder für farbiges Licht ausgelegt sein. Die Wandleranordnung kann eine Anzahl von Farbfiltern oder dispersive Elemente, z.B. ein Beugungsgitter, zur Aufspaltung des Messlichts in verschiedene Wellenlängenbereiche umfassen. Für die eigentliche Wandlung in elektrische Signale können Photodioden oder CCD-Wandler-Anordnungen vorgesehen sein.

Diese bekannten Farbmessgeräte sind für die Ausmessung von zumindest im Messbereich ebenen, glatten Oberflächen ausgelegt und liefern dort auch befriedigende Ergebnisse. Wenn es aber um die Ausmessung bzw. Farberkennung von Messobjekten mit strukturierter Oberfläche (Texturen) geht, versagen diese Farbmessgeräte in der Regel, weil die Messergebnisse durch die Oberflächenstruktur des Messobjekts verfälscht werden können. Je nach Ausprägung der Oberflächentextur kann nämlich das Beleuchtungslicht Glanzeffekte und/oder Schatteneffekte erzeugen, die die Messung beeinträchtigen und zu einem falschen Farbergebnis führen.

Ein weiteres Problem entsteht, wenn ein Messobjekt am interessierenden Messort zwei oder mehrere Farben aufweist und alle vorhandenen Farben bestimmt werden sollen. Diese Aufgabe ist mit den bekannten herkömmlichen Farbmessgeräten in der Regel überhaupt nicht zu bewältigen.

Die EP 1 707 928 A beschreibt ein Bildverarbeitungssystem und eine Kamera. Das Bildverarbeitungssystem wird z. B. in der Zahnmedizin angewandt und führt eine Fotographie der Zähne eines Patienten durch, während bewirkt wird, dass eine Vielzahl von Beleuchtungslicht-LEDs von unterschiedlichen Wellenlängen Licht emittieren, und zwar mittels einer fotographischen Vorrichtung, wenn eine Kronenreparatur oder Gebissreparatur eines Patienten durchgeführt wird, wobei die Bilddaten erfasst werden. Die Bilddaten werden zu einem Dentalfüllsystem übertragen, das eine Verarbeitungsvorrichtung bildet, wo Farbreproduktionsdaten durch Berechnung bestimmt werden. Zusätzlich werden Farbreproduktionsdaten zu dem Zahntechnikerbüro über ein öffentliches Netzwerk übertragen. Eine Reparaturmaterialmischungsverhältnisberechnungsdatenbank wird durchsucht und die Mischungsdaten für ein Material, das der Farbe des Zahns des Patientens entspricht wird gefunden, wobei eine Kronenreparatur oder Gebissreparatur oder dergleichen, welche sehr nahe der Farbe des Zahns des Patienten entspricht, produziert wird.

Die EP 1 707 928 A beschreibt eine spektrometrische Vorrichtung und ein Verfahren zur Messung optischer Charakteristiken eines Objektes. Ein optisches Charakteristikmesssystem zur Bestimmung der Farbe oder anderer optischer Charakteristiken von Zähnen wird beschrieben. Vorzugsweise sind Perimeterempfängerfaseroptiken von einer Quellfaseroptik beabstandet und empfangen Licht von der Oberfläche des Objektes/Zahns, das/der zu messen ist. Das Licht von den Perimeterfaseroptiken gelangt durch einer Vielzahl von Filtern. Das System verwendet die Perimeterempfängerfaseroptiken um Informationen betreffend die Höhe und den Winkel des Fühlers bzw. Messkopfs mit Bezug auf das Objekt/den Zahn das/der zu messen ist zu bestimmen. Unter einer Prozessorsteuerung kann die Messung der optischen Charakteristiken mit einer vorbestimmten Höhe und Winkel durchgeführt werden. Verschiedene Farbspektralfotometeranordnungen werden gezeigt. Transluszente, fluoreszente, glänzende und/oder Flächentexturdaten können ebenfalls erhalten werden. Ein Audiofeedback kann erhalten werden, um die Bedienernutzung des Systems zu führen. Der Fühler bzw. der Messkopf kann eine bewegbare oder ummantelte Spitze zum Schutz vor Kontamination aufweisen.

Die WO-00/73737 A beschreibt eine dreidimensionale optische Abtastung. Ein Verfahren zur Bestimmung der Farbe und des Profils einer Zielfläche beinhaltet das Abtasten der Zielfläche mit einem einfallenden Lichtstrahl, der eine Vielzahl von Wellenlängenkomponenten aufweist und das Aufspalten des reflektierten Lichtstrahls in separate Unterstrahlen bzw. Teilstrahlen von unterschiedlichen Wellenlängen. Die Unterstrahlen bzw. Teilstrahlen werden auf ein Sensorarray gerichtet, um zu ermöglichen, dass ihre relativen Positionen bestimmt werden. Ein Abschnitt des reflektierten Strahls ist auf einen Farbsensitiven Fotodetektor gerichtet, um Daten zu erhalten, die repräsentative für ihr ungefähre Farbzusammensetzung sind. Die Farbe und das Profil der Zielfläche wird aus den relativen Positionen der Unterstrahlen bzw. Teilstrahlen auf dem Sensorarray bestimmt, und zwar unter Verwendung der Daten, die für die ungefähre Wellenlängenzusammensetzung repräsentativ sind, um Zweideutigkeiten in dem Ergebnis zu lösen. Der geteilte Abschnitt des reflektierten Strahls kann auch mit einer höheren Rate als das Sensorarray abgetastet werden, um Informationen über die Erscheinung der Fläche mit einer höheren Auflösung als mit dem Sensorarray möglich wäre, zu erhalten.

Ausgehend von diesem Stand der Technik soll durch die vorliegende Erfindung ein Farbmessgerät geschaffen werden, das auch bei texturierten Oberflächen des Messobjekts eine zuverlässige Farbbestimmung ermöglicht. Insbesondere sollen durch die Erfindung bei einem Farbmessgerät die messtechnischen Voraussetzungen geschaffen werden, um auch an Messobjekten mit texturierten Oberflächen exakte Farbmessungen durchführen zu können.

Diese der Erfindung zugrundeliegende Aufgabe wird durch die im kennzeichnenden Teil des unabhängigen Anspruchs angeführten konstruktiven Massnahmen gelöst. Weiterbildungen und besonders vorteilhafte Ausgestaltungen der Erfindung sind Gegenstand der abhängigen Ansprüche.

Die Beleuchtungsanordnung weist einen Lampenring mit drei oder mehr gegenseitig vorzugsweise gleichabständig über 360° winkelversetzten Lampengruppen mit jeweils mindestens einer Lichtquelle zur Ausleuchtung des Messfelds unter einem vorgegebenen Einfallswinkelbereich relativ zur Normalen auf das Messfeld auf. Die Aufpickanordnung weist eine lichtelektrische Wandleranordnung in Form eines bildgebenden Sensors, insbesondere einer digitalen Kamera auf, welcher ein aus Bildpunkten zusammengesetztes Bild des ausgemessenen Messfelds erzeugt. Die Elektronikschaltung ist dazu ausgebildet, die Lichtquellen der Lampengruppen der Beleuchtungsanordnung selektiv einzuschalten, wobei der bildgebende Sensor jeweils für eine oder mehrere einzeln eingeschaltete Lichtquelle(n) ein eigenes Bild des Messfelds erzeugt und die zugehörigen Messwerte der einzelnen Bildpunkte als Bilddaten an die Elektronikschaltung weitergibt. Diese Auslegung der Messtechnik erlaubt die Ausmessung auch von mehrere Farben enthaltenden Messfeldem und die Beleuchtung derselben unter verschiedenen Raumwinkeln, so dass bei Messfeldern mit texturierter Oberfläche die Messwerte zwecks Korrektur und/oder Elimination der texturbedingten Störeffekte weiterverarbeitet werden können.

Vorteilhaft weist jede Lampengruppe eine Mehrzahl von vorzugsweise 3-12 Lichtquellen mit unterschiedlicher spektraler Strahlungscharakteristik auf, wobei die Lichtquellen in allen drei Lampengruppen gleich ausgebildet sind und pro Lampengruppe insgesamt jeweils im Wesentlichen den sichtbaren Spektralbereich abdecken. Bevorzugt sind dabei Lichtquellen gleicher Strahlungscharakteristik im Lampenring jeweils um denselben Winkel versetzt angeordnet. Durch die Mehrzahl von Lichtquellen unterschiedlicher spektraler Strahlungscharakteristik wird eine quasi-spektrale Messung erreicht. Der bildgebende Sensor bzw. die digitale Kamera kann dabei monochrom ausgelegt sein mit einer örtlichen Auflösung von mindestens 100*100 Pixel, was den Einsatz herkömmlicher, z.B. aus Mobiltelefonen bekannter Kameras ermöglicht. Vorzugsweise weist die Aufpickanordnung eine dem bildgebenden Sensor bzw. der digitalen Kamera vorgesetzte asphärische Linse auf, welche zusammen mit einem Sensor- bzw. Kamera-eigenen Objektiv ein telezentrisches Abbildungssystem bildet. Auch diese Ausbildung trägt dazu bei, dass eine handelsübliche Kamera eingesetzt werden kann.

Besonders zweckmässig ist es, wenn jede Lampengruppe eine oder mehrere insbesondere im Bereich von 360-400 nm strahlende UV-Lichtquellen aufweist. Dadurch lassen sich auch mit Aufhellern versehene Messobjekte korrekt ausmessen.

Ganz besonders vorteilhaft ist es, als Lichtquellen Leuchtdioden einzusetzen, welche vorzugsweise auf einer gemeinsamen Leiterplatte angeordnet sind. Dies erlaubt einen kompakten und kostengünstigen Aufbau der Beleuchtungsanordnung und damit der gesamten Messeinheit.

Vorteilhaft ist die Elektronikschaltung dazu ausgebildet, eine Maskierung der Bilddaten nach bestimmten Kriterien durchzuführen, wobei die Bilddaten von die Kriterien erfüllenden Bildpunkten von der weiteren Verarbeitung ausgeschlossen werden. Vorzugsweise werden dabei solche Bildpunkte maskiert bzw. ausgeschlossen, welche einen gegenüber den gesamten Bildpunkten des Messfelds um einen Schwellenwert höheren oder niedrigeren Helligkeitswert aufweisen oder welche Bildpunkte Glanzpunkte oder Schattenpunkte sind. Auf diese Weise wird schon ein erheblicher Teil der Störfaktoren reduziert.

Die Elektronikschaltung ist dazu ausgebildet, vorzugsweise anschliessend an die Maskierung, eine Verflachungskorrektur durchzuführen, wobei die räumliche Orientierung der Normalen auf die Bildpunkte des Messfelds relativ zu einer Messebene ermittelt wird und anhand der räumlichen Orientierung die Bilddaten der Bildpunkte dahingehend korrigiert werden, dass sie gleich denjenigen Bilddaten sind, die gemessen würden, wenn die Normale auf die betreffenden Bildpunkte senkrecht zur Messebene stünde und die Bildpunkte in der Messebene lägen. Dies bewirkt eine weitere Kompensation der texturbedingten Störeffekte.

Vorteilhaft ist die Elektronikschaltung dazu ausgebildet, vorzugsweise anschliessend an die Verflachungskorrektur die Bilddaten der Bildpunkte in Farbkoordinaten eines Farbraums umzurechnen und anhand dieser Farbkoordinaten die im Messfeld vorherrschenden Farben zu bestimmen. Vorteilhafterweise werden dazu die Bildpunkte nach Farb-Clustern klassifiziert und die vorherrschenden Farben aus den Farb-Clustern ermittelt. Die vorherrschenden Farben können dann von der Elektronikschaltung auf der Anzeige grafisch oder numerisch ausgegeben werden.

Im Folgenden wird ein Ausführungsbeispiel des erfindungsgemäßen Farbmessgeräts anhand der Zeichnung näher erläutert. In der Zeichnung zeigen:

Fig. 1        eine schematische Darstellung der wichtigsten Komponenten des Farb- messgeräts,

Fig. 2        eine Prinzipskizze zur Erläuterung der Beleuchtungsanordnung des Farb- messgeräts,

Fig. 3        eine Schrägansicht einer praktischen Realisierungsform der Beleuchtungs- anordnung,

Fig. 4        eine Schrägansicht einer die Beleuchtungsanordnung und die Aufpickan- ordnung enthaltenden Messeinheit des Farbmessgeräts,

Fig. 5    einen Schnitt durch die Messeinheit nach der Linie V-V der Fig. 4,

Fig. 6    eine Schrägansicht einer praktischen Realisierungsform der Aufpickan- ordnung des Farbmessgeräts,

Fig. 7    eine geschnittene Schrägansicht einer asphärischen Aufpicklinse der Auf- pickanordnung,

Fig. 8    eine geschnittene Schrägansicht einer Toruslinse der Beleuchtungsanord- nung,

Fig. 9    eine schematische Gesamtdarstellung des Farbmessgeräts,

Fig. 10   eine Aussenansicht des Farbmessgeräts im Schrägriss,

Fig. 11   eine Skizze zur Erläuterung eines Messwertkorrekturschritts und

Fig. 12   ein Blockschema der Messdatenverarbeitung und -auswertung.

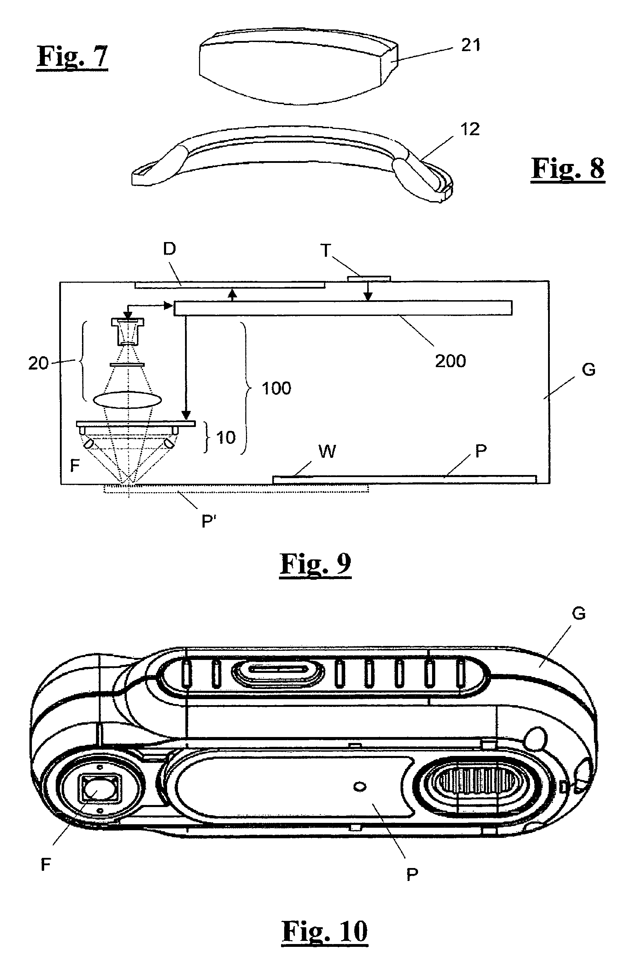

Das erfindungsgemässe Farbmessgerät ist vorzugsweise als Handmessgerät ausgeführt, wobei alle Funktionskomponenten in bzw. an einem länglichen, im Wesentlichen quadrischen Gehäuse G mit gerundeten Kanten untergebracht sind (Fig. 10). An der Unterseite des Gehäuses G ist ein Messfenster F vorgesehen, durch welches hindurch die Ausmessung des Messobjekts erfolgt. An der Oberseite des Gehäuses G befinden sich eine grafikfähige Anzeige D und Bedienungstasten T (Fig. 9). Im Inneren des Gehäuses G ist über dem Messfenster F eine als Ganzes mit 100 bezeichnete Messeinheit angeordnet. Ferner befindet sich im Inneren des Gehäuses G eine digitale, rechnerbasierte Elektronikschaltung 200 zur Steuerung des Farbmessgeräts und zur Messwertverarbeitung (Fig. 9). Die Elektronikschaltung 200 arbeitet mit der Messeinheit 100 und den Bedienungstasten T sowie der Anzeige D zusammen und enthält die üblichen Komponenten einer digitalen Steuerung, nämlich einen Prozessor, Arbeits-, Daten- und Programmspeicher und diverse Schnittstellen zum Verkehr mit den angeschlossenen Funktionseinheiten bzw. Ein- und Ausgabegeräten. Mittels der Bedienungstasten T lässt sich z.B. ein Messvorgang auslösen oder die Darstellung von Messergebnissen auf der Anzeige D steuern. Das Farbmessgerät ist ferner mit einer integrierten Weissreferenzkachel W ausgestattet, die auf einer Trägerplatte P an der Gehäuseunterseite angeordnet ist. Die Weissreferenzkachel W kann für Kalibrierungszwecke durch manuelle Verlagerung der Trägerplatte P vor dem Messfenster F positioniert werden, so wie dies in Fig. 9 durch die strichliert dargestellte Position P' der Trägerplatte angedeutet ist.

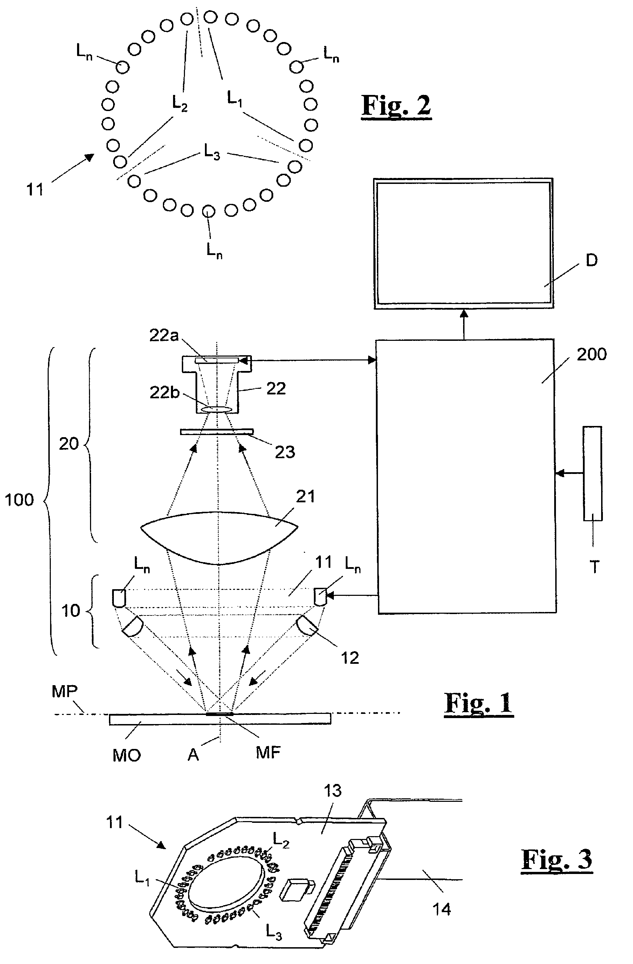

Im Folgenden werden die einzelnen Komponenten der Messeinheit 100 anhand der Figuren 1-8 detaillierter beschrieben.

Die Messeinheit 100 besteht im Wesentlichen aus zwei Funktionskomponenten, und zwar aus einer Beleuchtungsanordnung 10 und einer Aufpickanordnung 20. Die Beleuchtungsanordnung 10 dient zur Beleuchtung eines Messfelds MF auf der Oberfläche eines Messobjekts MO unter einem bestimmten Einfallswinkel. Die Aufpickanordnung 20 erfasst das vom Messfeld MF zurückgestrahlte Messlicht und wandelt es in elektrische Signale um, die der Elektronikschaltung 200 zugeführt und in dieser weiterverarbeitet werden.

Die Beleuchtungsanordnung 10 umfasst einen zur optischen Achse A der Aufpickanordnung 20 koaxialen Lampenring 11 und eine dem Lampenring messfensterseitig vorgesetzte, ebenfalls zur optischen Achse A koaxiale Toruslinse 12. Anstelle der Toruslinse, welche die Lichtausbeute steigert, kann auch irgendein anderes optisches Element oder minimal ein optisches Fenster vorgesehen sein. Der Lampenring 11 besteht aus (hier im Beispiel drei) gleichen, gegenseitig bezüglich der optischen Achse A (im Beispiel gleichabständig um 120°) winkelversetzt angeordneten Lampengruppen $L_1$, $L_2$, $L_3$. Jede Lampengruppe umfasst eine Anzahl von (hier z.B. 10) Lichtquellen in Form von Leuchtdioden $L_n$ unterschiedlicher Strahlungscharakteristik, die jeweils in unterschiedlichen Spektralbereichen (Farben) leuchten und insgesamt im Wesentlichen den gesamten sichtbaren Spektralbereich abdecken. Die Leuchtdioden in den drei Lampengruppen sind zweckmässigerweise gleichartig ausgebildet. Vorzugsweise aber nicht notwendigerweise ist die Reihenfolge der einzelnen Leuchtdioden $L_n$ in jeder der drei Lampengruppen $L_1$, $L_2$, $L_3$ gleich, so dass die Leuchtdioden gleicher Spektralcharakteristik ebenfalls gleichabständig über 360° gegenseitig winkelversetzt positioniert sind. Die Fig. 2 verdeutlicht dies.

In Fig. 3 ist eine praktische Realisierung des Lampenrings 11 dargestellt. Die Leuchtdioden der drei Lampengruppen $L_1$, $L_2$, $L_3$ sind hier auf einer gemeinsamen Leiterplatte 13 angeordnet und mittels eines Flachbandkabels 14 mit der Elektronikschaltung 200 verbunden. Die Toruslinse 12 ist in Fig. 8 detaillierter dargestellt.

Das von den Leuchtdioden $L_n$ des Lampenrings 11 ausgehende Licht gelangt über die Toruslinse 12 auf die Oberfläche des Messobjekts MO. Die Anordnung ist dabei so getroffen, dass das Messfeld MF von allen Leuchtdioden unter demselben Einfallswinkel im Bereich von 30-60° (im dargestellten Beispiel 45°) beleuchtet und möglichst gleichmässig ausgeleuchtet wird. Der Einfallswinkel bezieht sich dabei auf die Normale zum Messfeld, welche mit der optischen Achse A der Aufpickvorrichtung 20 zusammenfällt. Die Toruslinse 12 ist nicht unbedingt erforderlich, verbessert aber die Lichtausbeute der Leuchtdioden.

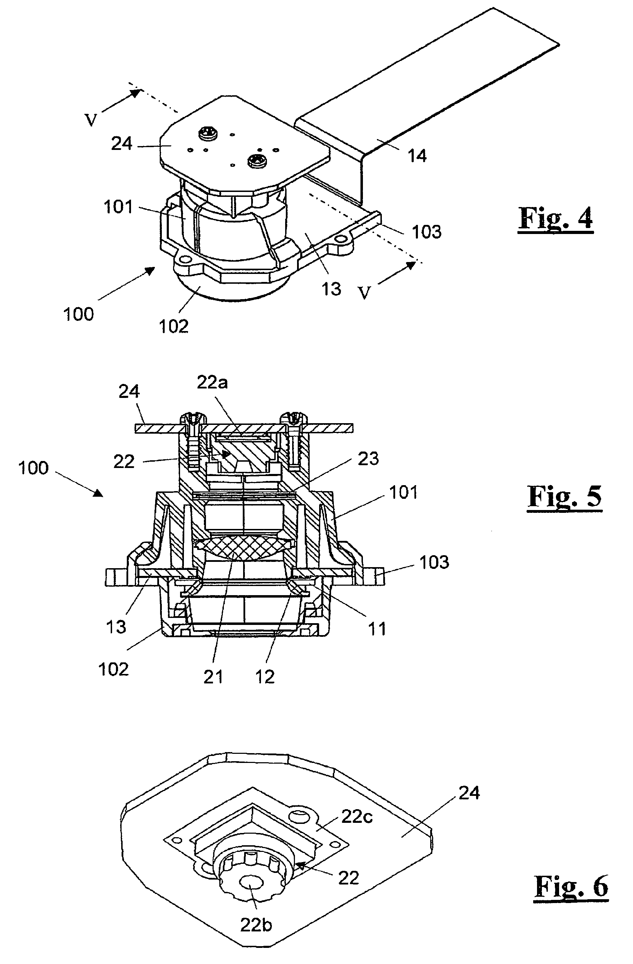

Die Aufpickanordnung 20 umfasst im Wesentlichen drei Komponenten, und zwar eine (hier im Beispiel und vorzugsweise asphärische) Aufpicklinse 21, einen monochromen (schwarz/weiss) bildgebenden Sensor in Form einer digitalen Kamera 22 und (optional) ein UV-Cut-Filter 23. Der bildgebende Sensor bzw. die digitale Kamera 22 ist eine handelsübliche Einheit, wie sie z.B. in Mobiltelefonen eingesetzt wird, und umfasst als wesentlichste Funktionskomponenten einen Kamera-Chip (lichtelektrischen Wandler-Chip) 22a und ein Kamera-Objektiv 22b. Ferner umfasst die Kamera 22 einen Montageflansch 22c (Fig. 6). Im Folgenden wird der bildgebende Sensor nur noch als Kamera bezeichnet. Die optische Achse A der Aufpickanordnung 20 steht senkrecht auf das Messfeld MF des Messobjekts MO. Die Aufpicklinse 21 stellt zusammen mit dem Kamera-Objektiv 22b ein telezentrisches Abbildungssystem dar, welches das in der Messebene MP befindliche Messfeld MF auf den Kamera-Chip 22a abbildet. Die Kamera 22 erzeugt dabei ein digitales Abbild des Messfelds MF mit einer dem Kamera-Chip 22a entsprechenden Auflösung von typisch mindestens 100*100 oder grösser, vorzugsweise etwa 200*200 - etwa 640*480 Bildpunkten (Pixel). Die Bildsignale (Messwerte der einzelnen Bildpunkte) werden der Elektronikschaltung 200 zugeführt und dort in der weiter unten näher erläuterten Weise aufbereitet und weiter verarbeitet. Es versteht sich, dass bei Verwendung einer höher auflösenden Kamera auch mehrere Pixel zu einem Bildpunkt zusammengefasst werden können. Die örtliche Auflösung der Bildpunkte sollte dabei aber vorzugsweise mindestens 100*100 betragen.

Die Fig. 6 zeigt die digitale Kamera 20 etwas detaillierter. Man erkennt, wie die Kamera 20 mittels ihres Montageflanschs 22c an der Unterseite einer Leiterplatte 24 befestigt ist. Diese Leiterplatte 24 kann gleichzeitig auch die Elektronikschaltung 200 tragen oder ist mit letzterer über nicht dargestellte Leitungen elektrisch verbunden.

Die asphärische Aufpicklinse 21 ist in Fig. 7 detaillierter dargestellt.

Die Messeinheit 100 mit der Beleuchtungsanordnung 10 und der Aufpickanordnung 20 ist vorteilhafterweise zu einer körperlichen Einheit zusammengefasst. Die Figuren 4 und 5 verdeutlichen dies. Die Messeinheit 100 umfasst ein Gehäuse mit einem Oberteil 101 und einem Unterteil 102 sowie zwei seitlichen Stützschienen 103. Im Gehäuseoberteil 101 sind die digitale Kamera 22, die Aufpicklinse 21 und optional das UV-Cut-Filter 23 gehaltert, im Gehäuseunterteil 102 sind der Lampenring 11 mit der diesen tragenden Leiterplatte 13 und die Toruslinse 12 angeordnet. Die Leiterplatte 13 ragt seitlich aus dem Geäuse heraus und ist durch die Stützschienen 103 gehalten. Die Messeinheit 100 ist im Gerätegehäuse G so über dessen Messfenster F positioniert, dass die Messebene MP der Messeinheit im Wesentlichen mit der Gehäuseunterseite zusammenfällt. Wenn das Farbmessgerät mit seiner Gehäuseunterseite auf das auszumessende Messobjekt MO aufgesetzt ist, befindet sich das Messfeld MF dann genau in der Messebene (Fig. 1).

Beim vorstehend beschriebenen Ausführungsbeispiel des erfindungsgemässen Farbmessgeräts sind pro Lampengruppe 10 Leuchtdioden unterschiedlicher Strahlungscharakteristik vorgesehen. Dies erlaubt eine quasi-spektrale Ausmessung des Messobjekts in 10 verschiedenen Spektral-Bereichen (Farbkanälen). Es ist jedoch auch möglich, eine grössere oder kleinere Anzahl von Leuchtdioden pro Lampengruppe vorzusehen, z.B. 3-12, wodurch sich die spektrale Auflösung entsprechend erhöht bzw. verringert. Ferner ist es auch möglich, die spektrale Auflösung des Messlichts z.B. durch Einsatz einer farbtauglichen Kamera in die Aufpickanordnung zu verlagern. In diesem Fall wäre pro Lampengruppe lediglich eine einzige Leuchtdiode bzw. allgemein Lichtquelle erforderlich, welche den gesamten interessierenden Spektralbereich abdeckt. Prinzipiell können anstelle der Leuchtdioden auch andere Lichtquellen entsprechender Strahlungscharakteristiken zum Einsatz kommen. Allenfalls kann auch eine Lichtquelle mit variablem UV-Anteil zum Einsatz kommen. Eine solche Lichtquelle bestünde minimal aus einer weissen Leuchtdiode für den gesamten sichtbaren Bereich des Spektrums von 400 nm bis 700 nm und einer UV-Leuchtdiode im Bereich von 360-400 nm. Die Verwendung von UV-Licht zusammen mit dem sichtbaren Beleuchtungslicht erlaubt die korrekte Ausmessung von mit optischen Aufhellern versehenen Messobjekten für eine beliebe Beleuchtungslichtart (z.B. CIE-A, D65, etc).

Einer der wesentlichsten Aspekte des erfindungsgemässen Farbmessgeräts liegt in der Ausbildung der Beleuchtungsanordnung mit den drei oder mehr gegenseitig vorzugsweise gleichabständig winkelversetzten Lampengruppen $L_1$, $L_2$, $L_3$, welche die messtechnischen Voraussetzungen für die korrekte Farbmessung an texturierten Oberflächen schafft. Mittels dieser drei oder mehr Lampengruppen kann die Beleuchtung des Messobjekts MO bzw. des auszumessenden Messfelds MF aus drei bzw. mehr verschiedenen Raumrichtungen erfolgen und es können bei Beleuchtung aus jeder der drei bzw. mehr Raumrichtungen separate Messwerte erfasst werden. Anhand dieser separaten Messwerte für jede der Raumrichtungen können dann durch entsprechende Verarbeitung strukturbedingte Effekte bei der Messung von texturierten Oberflächen berücksichtigt bzw. kompensiert werden. Es versteht sich, dass die drei bzw. mehr Lampengruppen auch mit unterschiedlichen Winkelabständen im Lampenring angeordnet sein können. Den nachfolgenden Erläuterungen ist jeweils die in der Zeichnung dargestellte Konfiguration mit 3 Lampengruppen im gegenseitigen Winkelabstand von 120° zugrundegelegt. Alle Erläuterungen lassen sich jedoch ohne erfinderisches Zutun auf Konfigurationen mit mehr als 3 Lampengruppen und mit ungleichmässigen gegenseitigen Winkelabständen übertragen.

Für einen vollständigen Ausmessvorgang eines Messfelds werden die Leuchtdioden der drei Lampengruppen $L_1$, $L_2$, $L_3$ von der Elektronikschaltung 200 einzeln sequentiell eingeschaltet und dabei für jede aktivierte Leuchtdiode jeweils ein vollständiges digitales Bild des Messfelds MF aufgenommen. Bei 10 Leuchtdioden pro Lampengruppe ergibt dies insgesamt 3*10=30 Bilder des Messfelds, die drei Sätze von jeweils 10 Spektral-Auszügen des Messfelds darstellen. Pro von der Kamera aufgelöstem Bildpunkt liegen somit 30 Einzelmesswerte vor. Bei einer Auflösung der Kamera 22 von 640*480 Pixel entspricht dies 30*640*480 = 921600 Einzelmesswerten. Die Gesamtheit dieser Einzelmesswerte bildet die drei Sätze von Spektral-Auszügen des Messfelds, wobei jeweils 3 Spektral-Auszüge ein und demselben Spektralbereich angehören, aber unter drei verschiedenen Beleuchtungsrichtungen aufgenommen wurden.

Die von der digitalen Kamera 22 erzeugten rohen Bilddaten (3*10*640*480 Einzelmesswerte) werden vor der eigentlichen Auswertung in an sich bekannter Weise zunächst einmal aufbereitet. Vorbereitend dazu wird einerseits eine Dunkelmessung durchgeführt, um die Dunkelmesswerte jedes einzelnen Kamera-Pixels zu ermitteln. Andererseits wird eine Weissmessung an einer unstrukturierten Weissreferenz durchgeführt, wobei diese sequentiell mit jeder einzelnen Leuchtdiode der drei Lampengruppen beleuchtet und ausgemessen wird und als Ergebnis für jede Leuchtdiode und jedes Kamera-Pixel ein Weissmesswert vorliegt. Als Weissreferenz kann ein externes Element oder vorzugsweise die integrierte Weissreferenzkachel W herangezogen werden. Die Rohdatenaufbereitung besteht nun darin, dass von jedem Messwert der Dunkelmesswert des betreffenden Kamera-Pixels abgezogen wird, der Differenzwert entsprechend der Linearitätscharakteristik der Kamera linearisiert wird und der linearisierte Wert durch den zur jeweiligen Leuchtdiode und dem jeweiligen Kamera-Pixel gehörenden, ebenfalls um den Dunkelmesswert reduzierten und linearisierten Weissmesswert dividiert wird. Die letztere Massnahme korrigiert räumliche Inhomogenitäten der Beleuchtung und Unterschiede zwischen den einzelnen Leuchtdioden. Nach diesen Schritten liegen aufbereitete Bilddaten vor, die der weiteren Verarbeitung und Auswertung zugrundeliegen. Im Folgenden werden unter Bilddaten bzw. Messwerten immer die gemäss Vorstehendem aufbereiteten Bilddaten bzw. Messwerte verstanden.

Die Bilddaten können von der Elektronikschaltung dazu verwendet werden, ein Vorschaubild des auszumessenden Messfelds auf der Anzeige D darzustellen. Für die Darstellung des Vorschaubilds kann eventuell auch nur ein Teil der Bilddaten herangezogen werden oder es kann zu diesem Zweck eine Messung mit nur einem Teil der Leuchtdioden durchgeführt werden. Das Vorschaubild kann dazu benutzt werden, das Farbmessgerät korrekte auf dem Messfeld zu positionieren und dann die eigentliche Messung auszulösen.

Bei texturierten Messobjekten ist die Oberfläche derselben nicht planar. Dadurch entstehen, wie schon einleitend beschrieben, Störeffekte, welche das Messergebnis verfälschen können. Um diese texturbedingten Störeffekte zu kompensieren, werden die Bilddaten gemäss einem weiteren wichtigen Aspekt der Erfindung in verschiedenen Verarbeitungsschritten analysiert und korrigiert. Diese Verarbeitungsschritte werden durch entsprechende in der Elektroukschaltung 200 gespeicherte Verarbeitungsroutinen durchgeführt.

In einem ersten Verarbeitungsschritt werden die Bilddaten maskiert. Darunter ist zu verstehen, dass die Bilddaten aus sogenannten "schlechten" Bildpunkten (Pixel) von der weiteren Verarbeitung ausgeschlossen werden. Unter "schlechten" Bildpunkten sind solche zu verstehen, die sich aufgrund ihrer zugehörigen Messwerte nicht für die weitere Verarbeitung eignen bzw. das gesuchte Messergebnis verfälschen würden. Diese Ausfilterung bzw. Maskierung der "schlechten" Bildpunkte kann anhand verschiedener Kriterien erfolgen. Z.B. können ungewöhnlich helle Bildpunkte ausgeschlossen werden, deren Helligkeit um einen bestimmten Schwellenwert höher ist als z.B. der Mittelwert über die Gesamtheit aller Bildpunkte (des gesamten ausgemessenen Messfelds) oder einer Teilmenge davon. Analog können auch ungewöhnlich dunkle Bildpunkte ausgeschlossen werden, deren Helligkeit um einen Schwellenwert niedriger ist als z.B. der Mittelwert über die Gesamtheit aller Bildpunkte oder einer Teilmenge davon. Die Teilmenge kann z.B. aus denjenigen Bildpunkten bestehen, die innerhalb einer festgelegten Distanz zum jeweils betrachteten Bildpunkt liegen. Weiters können sog. Glanz- und/oder Schattenbildpunkte ausgeschlossen werden. Ein solcher Glanz- bzw. Schattenbildpunkt ist daran erkennbar, dass die drei unter verschiedenen Beleuchtungsrichtungen (aber im selben Spektralbereich) ermittelten Messwerte des Bildpunkts stark unterschiedlich sind. Im Fall eines Glanzpunkts ist z.B. einer der Messwerte deutlich höher als die beiden anderen, im Falle eines Schattenpunkts entsprechend deutlich tiefer. Die um die "schlechten" Bildpunkte reduzierten Bilddaten sind im Folgenden als maskierte Bilddaten bezeichnet.

Nach dem Maskierungsschritt erfolgen eine Relief-Analyse des Messfelds anhand der maskierten Bilddaten und eine darauf basierende Verflachungskorrektur. Ziel dieser Verflachungskorrektur ist es, die texturbedingte Neigung der Messpunkte bzw. die daraus resultierende Messwertverfälschung gegenüber ungeneigten, zur Messebene parallelen Messpunkten rechnerisch auszugleichen. Ferner werden auch diejenigen Störeffekte ausgeglichen, die sich aus unterschiedlichen Höhenlagen der einzelnen Bildpunkte bezüglich der Messebene ergeben.

Für diese Verflachungskorrektur wird für jeden Messpunkt aus seinen drei unter verschiedenen Beleuchtungsrichtungen (aber im selben Spektralbereich) ermittelten Messwerten die räumliche Orientierung seiner Oberfläche bezüglich der Messebene bestimmt. Die räumliche Orientierung wird dabei durch die Richtung des Normalvektors auf die Oberfläche des Messpunkts ausgedrückt. Anhand der durch den Normalvektor ausgedrückten räumlichen Orientierung des Messpunkts werden dann die drei Messwerte so korrigiert, dass sie denjenigen Messwerten entsprechen, die ermittelt würden, wenn der betreffende Messpunkt in der Messebene liegen würde, die Oberfläche des Messpunkts also gewissermassen "flach", d.h. nicht zur Messebene geneigt wäre.

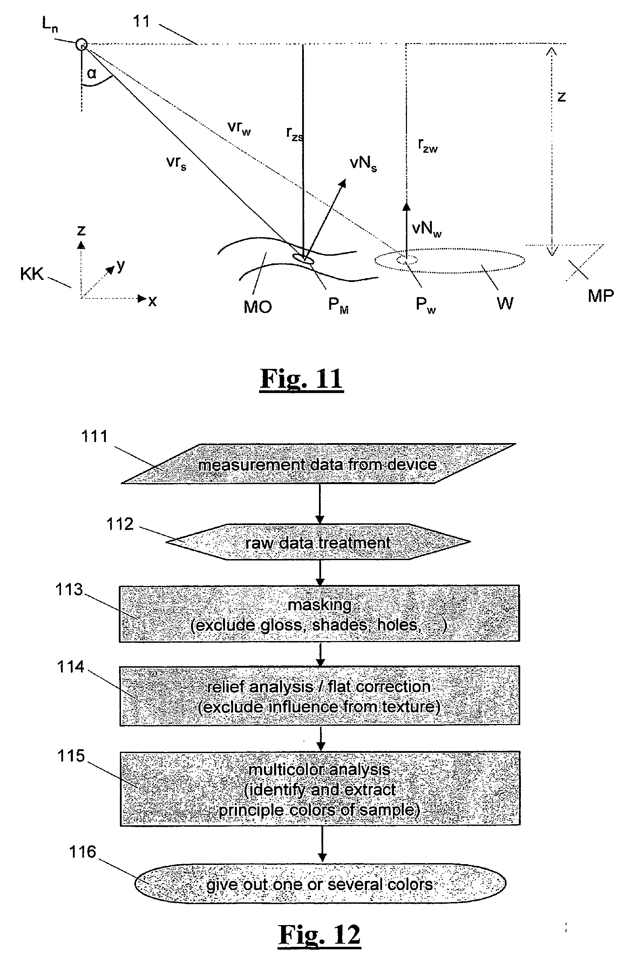

Die Verflachungskorrektur ist im Folgenden anhand der Fig. 11 erläutert, in welcher ein stark vergrösserter Ausschnitt des Messobjekts MO mit einem einzelnen Messpunkt $P_M$ sowie ein Ausschnitt der Weissreferenz W mit einem entsprechenden Messpunkt $P_W$ dargestellt ist. Ein Koordinatenkreuz KK verdeutlicht die räumlichen Verhältnisse der Beleuchtung des Messpunkts. Die Messebene MP verläuft parallel zu der durch die x- und y-Achse des Koordinatenkreuzes aufgespannten Ebene, die optische Achse der Aufpickanordnung ist parallel zur z-Achse des Koordinatenkreuzes. Der hier nur durch eine Linie angedeutete Lampenring 11 der Beleuchtungsanordnung liegt im Abstand z oberhalb der Messebene MP parallel zu dieser. Der Einfallswinkel des Beleuchtungslichts relativ zur optischen Achse ist mit $\alpha$ bezeichnet. Wie man erkennt, ist die Oberfläche des Messpunkts $P_M$ aufgrund der Oberflächentextur des Messobjekts zur Messebene geneigt, d.h. die Normale bzw. der Normalvektor $vN_s$ auf das Messobjekt im Bereich des Messpunkts steht nicht senkrecht zur Messebene MP, sondern irgendwie "schief" im Raum. Der Messpunkt wird von einer der Leuchtdioden $L_n$ mit Licht beaufschlagt, wobei der gerichtete Abstand zwischen Leuchtdiode und Messpunkt in der Figur als Beleuchtungsvektor $vr_s$ bezeichnet ist und sich aus den drei räumlichen Komponenten $r_{xs}$, $r_{ys}$ und $r_{zs}$ zusammensetzt. Die Komponente $r_{zs}$ ist für alle Leuchtdioden $L_n$ identisch mit dem Abstand zwischen Messpunkt $P_M$ und Lampenring 11, die Komponenten $r_{xs}$ und $r_{ys}$ hängen von der Position der Leuchtdiode im Lampenring und der Lage des Bildpunkts $P_M$ im Messfeld ab. Analoges gilt für die zur Verdeutlichung eingezeichnete Weissreferenz W, die in Wirklichkeit natürlich an die Stelle des Messobjekts tritt. Da die Weissreferenz W grundsätzlich planar ist und in der Messebene MP angeordnet ist, steht der Normalvektor $vN_w$ für jeden Messpunkt $P_W$ der Weissreferenz senkrecht zur Messebene. Der Beleuchtungsvektor zwischen der Leuchtdiode $L_n$ und dem Messpunkt $P_W$ auf der Weissreferenz ist mit $vr_w$ bezeichnet, seine z-Komponente mit $r_{zw}$.

Die folgenden Ausführungen gelten für alle Messpunkte des Messfelds und für alle Farbkanäle, d.h. für die (im vorstehend beschriebenen Ausführungsbeispiel z.B. 10) verschiedenen Spektralbereiche des Beleuchtungslichts.

Bei der Messung wird jeder Messpunkt jeweils sequentiell von drei Leuchtdioden gleicher Farbe (spektraler Strahlungscharakteristik) aus drei gegenseitig (um 120°) versetzten Raumrichtungen beleuchtet. Dabei ergeben sich drei Messwerte, die in die nachstehenden Berechnungen eingehen.

Für den von der Kamera gemessenen und in der beschriebenen Weise aufbereiteten und auf die Weissreferenz normalisierten Strahldichtefaktor 1 eines Bildpunkts gilt für eine Probe und eine Weissreferenz mit Lambert'scher Reflektionscharakteristik

$$l \approx \frac{E_s * R_s}{E_w * R_w} \qquad\qquad \text{(Formel 1)}$$

Darin bedeuten $E_s$ und $E_w$ die Bestrahlungsstärken des Bildpunkts des Messobjekts bzw. der Weissreferenz und $R_s$ und $R_w$ die Reflexionskoeffizienten des Bildpunkts des Messobjekts bzw. der Weissreferenz.

Mit der in Fig. 11 gezeigten Beleuchtungskonfiguration und unter Annahme einer Lambert'schen Strahlungscharakteristik der Leuchtdioden gilt für das Messobjekt

$$E_s = I_0 * \frac{r_{zs}}{r_s} * \frac{(vN_s * vr_s)}{r_s^{\,3}} = I_0 * r_{zs} * \frac{(vN_s * vr_s)}{r_s^{\,4}} \qquad\qquad \text{(Formel 2)}$$

Darin bedeuten $E_s$ die Bestrahlungsstärke im Messpunkt $P_M$ des Messobjekts, $I_0$ die Spitzenstrahlungsintensität der Leuchtdiode, $vN_s$ den Normalvektor auf den Messpunkt, $vr_s$ den Beleuchtungsvektor, $r_{zs}$ die z-Komponente des Beleuchtungsvektors und $r_s$ den Betrag (Länge) des Beleuchtungsvektors.

Analog gilt für die Ausmessung der Weissreferenz unter derselben Messkonfiguration

$$E_w = I_0 * \frac{r_{zw}}{r_w} * \frac{(vN_w * vr_w)}{r_w^{\,3}} = I_0 * r_{zw} * \frac{(vN_w * vr_w)}{r_w^{\,4}} \qquad\qquad \text{(Formel 3)}$$

Darin bedeuten $E_w$ die Bestrahlungsstärke im Messpunkt $P_W$ der Weissreferenz, $I_0$ die Spitzenstrahlungsintensität der Leuchtdiode, $vN_w$ den Normalvektor auf den Messpunkt der Weissreferenz, $vr_w$ den Beleuchtungsvektor, $r_{zw}$ die z-Komponente des Beleuchtungsvektors und $r_w$ den Betrag (Länge) des Beleuchtungsvektors.

Durch Einsetzen der Formeln 2 und 3 in Formel 1 ergibt sich unter Berücksichtigung, dass bei einer unstrukturierten, in der Messebene positionierten Weissreferenz der Normalvektor $vN_w$ senkrecht auf die Messebene steht, die folgende Beziehung:

$$l = \frac{r_{zs} * \dfrac{(vN_s * vr_s)}{r^4{}_s} * R_s}{r_{zw}{}^2 * \dfrac{1}{r^4{}_w} * R_w}$$

(Formel 4)

Für die Beleuchtung mit den drei Leuchtdioden aus den drei verschiedenen Raumrichtungen lässt sich die Situation durch die folgende Matrizengleichung ausdrücken:

$$\begin{pmatrix} l_1 \\ l_2 \\ l_3 \end{pmatrix} = \begin{bmatrix} v_1 r_{xs1} & v_1 r_{ys1} & v_1 r_{zs1} \\ v_2 r_{xs2} & v_2 r_{ys2} & v_2 r_{zs2} \\ v_3 r_{xs3} & v_3 r_{ys3} & v_3 r_{zs3} \end{bmatrix} * \begin{pmatrix} N_{xs} \\ N_{ys} \\ N_{zs} \end{pmatrix} * \frac{R_s}{R_w}$$

(Formel 5)

Darin ist $v_i = (r_w{}^4 * r_{zs})/(r_{si}{}^4 * r_{zw}{}^2)$ für i = 1, 2, 3 entsprechend den drei Leuchtdioden.

Die Formel 5 lässt sich kompakt wie folgt darstellen:

$$\begin{pmatrix} l_1 \\ l_2 \\ l_3 \end{pmatrix} = [M] * vN_s * l_F$$

(Formel 6)

Diese Matrizengleichung lässt sich nach den interessierenden Grössen Normalvektor $vN_s$ und seiner Norm $1_F$ auflösen:

$$vN_s * l_F = [M]^{-1} * \begin{pmatrix} l_1 \\ l_2 \\ l_3 \end{pmatrix}$$

(Formel 7)

Die Grösse $1_F$ ist hierbei der auf die Weissreferenz normalisierte Strahldichtefaktor, der für einen flachen Bildpunkt in der Messebene gemessen würde, also der gesuchte, 'flachgerechnete' Messwert.

In der Gleichung der Formel 7 sind auf der rechten Seite ausser den drei z-Komponenten $r_{zs1}$ - $r_{zs3}$ der Beleuchtungsvektoren $vr_{s1}$ - $vr_{s3}$ alle Grössen bekannt. Da die Leuchtdioden in einer Ebene parallel zur Messebene liegen, sind diese drei z-Komponenten gleich gross. Die Grösse der z-Komponenten hängt von der Struktur-Tiefe des Messfelds ab, d.h. von der Tiefe $\Delta z$ des jeweiligen Messpunkts $P_M$ gegenüber der Messebene MP. Durch Simulation konnte gezeigt werden, dass die "Flachrechnung" mit ausreichender Genauigkeit durchgeführt werden kann, wenn für alle Messpunkte des Messfelds eine einheitliche mittlere Tiefe $\Delta z$ zugrundegelegt wird, so dass dann für die z-Komponenten aller Bildpunkte $T_{2s1} = T_{zs2} = T_{zs3} = z + \Delta z$ gilt, worin z der Abstand des Lampenrings von der Messebene ist.

Die mittlere Tiefe $\Delta z$ kann aus den Messdaten in verschiedener Weise errechnet werden. Eine Möglichkeit besteht beispielsweise darin, die Verflachungskorrektur mit verschiedenen festen Werten für $\Delta z$ durchzuführen (z.B. 0 mm, 0.3 mm, 0.6 mm, ...) und die Standard-Abweichung der "flachgerechneten" Messwerte $1_F$ als Funktion von $\Delta z$ zu analysieren. Der optimale Wert für die Tiefe $\Delta z$ ergibt sich dann aus dem Minimum der Standard-Abweichung.

Es versteht sich, dass es genügt, im Minimum nur ein Set von Bilddaten aus mindestens drei unterschiedlichen Raumrichtungen im selben Spektralbereich beleuchtet zu haben, um die räumliche Orientierung der Oberfläche bezüglich der Messebene zu bestimmen. Die zu der spektralen Charakterisierung der Probe notwendigen mindestens zwei weiteren Bilddaten anderer Farbkanäle könnten also auch durch gleichzeitige Aktivierung der in jeweils einen Spektralbereich abstrahlenden Lichtquellen aller Lampengruppen errreicht werden, oder man könnte alternativ nur eine Lampengruppe mit den entsprechenden Lichtquellen bestücken. Man könnte auch aus mehreren einzeln eingeschalteten Lichtquellen nur ein Bild generieren. Die Verflachungskorrektur bzw. "Flachrechnung" solch "inkompleter Sets von Bilddaten" (es liegen jeweils Bilddaten aus weniger als 3 Raumrichtungen vor) erfolgt dann einfach nach allgemeingültigen Optikprinzipien unter Kenntnis des Normalvektors und der Lage der Bildelemente und der Lichtquellen.

Nach dieser Verflachungskorrektur liegen für jeden Bildpunkt eine der Anzahl unterschiedlicher Leuchtdioden pro Lampengruppe entsprechende Anzahl von mehr oder weniger schmalbandigen, verflachungskorrigierten ("flachgerechneten") Messwerten vor, die die Grundlage für die weitere Verarbeitung bilden.

Als nächster Schritt erfolgt eine Farbanalyse der gemäss Vorstehendem maskierten und verflachungskorrigierten Bilddaten bzw. Messwerte. Ziel dieser Farbanalyse ist es, alle im Messfeld vorkommenden dominierenden Farben aufzufinden. Unter dominierenden Farben werden diejenigen verstanden, die im Messfeld vorherrschend vertreten sind. Vereinzelte "Ausreisser" und Artefakte sollen dabei unberücksichtigt bleiben.

Dazu werden die (verflachungskorrigierten) Messwerte der einzelnen Bildpunkte zunächst in XYZ-Farbwerte umgewandelt. Dies geschieht in an sich bekannter Weise durch Multiplikation der Messwerte der Farbkanäle (hier z.B. 10) mit einer bei der werkseitigen Geräteeichung bestimmten Kalibrationsmatrix, die bei z.B. 10 Farbkanälen die Dimension 3* 10 hat. Danach werden die XYZ-Farbwerte der einzelnen Bildpunkte in an sich bekannter Weise (gem. den Berechnungsformeln von CIE) in Farbkoordinaten eines Farbraums, vorzugsweise etwa des L,a,b-Farbraums umgerechnet. Die Farbe jedes Bildpunkts ist dann durch die entsprechenden Farbkoordinaten definiert. Dann werden Farb-Cluster gebildet und z.B. anhand ihrer räumlichen Verteilung und ihrer Farbunterschiede analysiert, um daraus die dominierenden Farben zu bestimmen.

Die Cluster-Bildung kann z.B. mittels Häufigkeitsverteilungsmethoden oder nach der an sich bekannten Methode des sog. "k-means clustering" erfolgen (siehe z.B. Wikipedia, k-means clustering). Bei letzterer Methode werden, ausgehend von einer grösseren Anzahl von durch je eine anfängliche Mittenfarbe (Farbkoordinaten der Mittenfarben) definierten (zunächst unpopulierten) Clustern, die Bildpunkte jeweils dem jenigen Cluster zugeordnet, zu dessen Mittenfarbe die Farbe des Bildpunkts den geringsten Farbabstand hat. Hernach werden die Mittenfarben der Cluster z.B. durch Mittelung der Farbkoordinaten der jeweils in den Clustern enthaltenen Bildpunkte neu festgelegt und dann die Bildpunkte erneut zugeordnet. Dies wird solange wiederholt, bis sich die Cluster nicht mehr oder nur noch marginal ändern.

Für die Analyse der so populierten Farb-Cluster kann z.B. wie folgt vorgegangen werden: Es werden die Farbabstände $\Delta E = (\Delta L^2 + \Delta a^2 + \Delta b^2)^{0.5}$ zwischen den Mittenfarben der einzelnen Farb-Cluster berechnet. Falls der kleinste berechnete Farbabstand kleiner als ein vorgegebener Grenzwert (z.B. $\Delta E = 5$) ist, werden die beiden betreffenden Farb-Cluster zu einem neuen Farb-Cluster vereinigt und die beiden ursprünglichen Cluster gelöscht. Dieser Vorgang wird solange wiederholt, bis der kleinste berechnete Farbabstand grösser ist als der Grenzwert. Nun wird die Wichtigkeit der so verbliebenen bzw. neu gebildeten Farb-Cluster bestimmt. Die Wichtigkeit kann z.B. durch den prozentualen Anteil der Bildpunkte pro Cluster bezogen auf die Gesamtanzahl der Bildpunkte aller Cluster gemessen werden. Als dominierende Farben werden dann die Mitten-Farben derjenigen Farb-Cluster definiert, deren Wichtigkeit über einem festgelegten Mindestwert (z.B. 10%) liegt.

Als letzter Schritt erfolgt die Ausgabe der gewünschten Messresultate auf der Anzeige D. Dabei können z.B. die Farbkoordinaten der gefundenen dominierenden Farben zahlenmässig angezeigt werden. Es ist auch möglich, das ausgemessene Messfeld mit den sich aus den berechneten Farbkoordinaten ergebenden Farben der einzelnen Bildpunkte bildlich darzustellen. Ferner ist es beispielsweise möglich, nur diejenigen Bildpunkte des Messfelds darzustellen, die eine der aufgefundenen dominierenden Farben aufweisen. Weiters ist es möglich, mittels der Bedienungstasten eine bestimmte Stelle auf dem angezeigten Bild des Messfelds auszuwählen und dadurch die zahlenmässige Anzeige der betreffenden Farbe zu veranlassen. Weitere Ausgabemöglichkeiten sind denkbar.

In der Figur 11 sind die vorstehend erläuterten Schritte der Messwertverarbeitung in Form eines Blockschemas nochmals übersichtlich zusammengefasst. Block 111 bezeichnet die Erfassung der (rohen) Bilddaten durch die Kamera. Block 112 stellt die Aufbereitung der rohen Bilddaten dar. Block 113 beinhaltet den Maskierungsschritt. In Block 114 erfolgen die Relief-Analyse und die Verflachungskorrektur. Block 115 stellt die Farb-Analyse dar und Block 116 versinnbildlicht die Ausgabe der Messresultate.

Es versteht sich, dass die Reihenfolge der einzelnen Verarbeitungsschritte (Maskierung, Verflachungskorrektur, Bestimmung der dominanten Farben) auch anders gewählt werden kann und dass diese Verarbeitungsschritte je nach Einsatzzweck des Farbmessgeräts auch ganz oder teilweise weggelassen werden können.

**Patentansprüche**

1. Farbmessgerät mit einer Beleuchtungsanordnung (10) für ein auszumessendes Messfeld (MF) eines Messobjekts (MO), einer Aufpickanordnung (20) zur Erfassung des vom Messfeld zurückgestrahlten Messlichts und zur Umwandlung desselben in entsprechende elektrische Signale, einer Elektronikschaltung (200) zur Funktionssteuerung des Farbmessgeräts und zur Verarbeitung und Auswertung der elektrischen Signale und einer Anzeige (D) zur Darstellung von Messergebnissen, wobei:

die Beleuchtungsanordnung (10) einen Lampenring (11) mit mindestens drei gegenseitig vorzugsweise gleichabständig über 360° winkelversetzten Lampengruppen ($L_1$, $L_2$, $L_3$) mit jeweils mindestens einer Lichtquelle ($L_n$) zur Ausleuchtung des Messfelds (MF) unter einem vorgegebenen Einfallswinkelbereich relativ zur Normalen auf das Messfeld aufweist; die Aufpickanordnung (20) eine lichtelektrische Wandleranordnung in Form eines bildgebenden Sensors, insbesondere einer digitalen Kamera (22) aufweist, welcher ein aus Bildpunkten zusammengesetztes Bild des ausgemessenen Messfelds (MF) erzeugt;

die Elektronikschaltung (200) dazu ausgebildet ist, die Lichtquellen ($L_n$) der Lampengruppen ($L_1$, $L_2$, $L_3$) der Beleuchtungsanordnung (10) selektiv einzuschalten, wobei der bildgebende Sensor (22) jeweils für eine oder mehrere einzeln eingeschaltete Lichtquelle(n) ($L_n$) ein eigenes Bild des Messfelds (MF) erzeugt und die unterschiedlichen Beleuchtungsrichtungen zugehörigen Messwerte der einzelnen Bildpunkte als Bilddaten an die Elektronikschaltung (200) weitergibt;

**dadurch gekennzeichnet, dass**:

die Elektronikschaltung (200) dazu ausgebildet ist, eine Verflachungskorrektur (114) zur Kompensation von texturbedingten Störeffekten durchzuführen, wobei aus den Messwerten der unterschiedlichen Beleuchtungsrichtungen die räumliche Orientierung der Normalen auf die Bildpunkte des Messfelds (MF) relativ zu einer Messebene (MP) ermittelt wird und anhand der räumlichen Orientierung die Bilddaten der Bildpunkte dahingehend korrigiert werden, dass sie gleich denjenigen Bilddaten sind, die gemessen würden, wenn die Normale auf die betreffenden Bildpunkte senkrecht zur Messebene stünde und die Bildpunkte in der Messebene lägen.

2.  Farbmessgerät nach Anspruch 1, **dadurch gekennzeichnet, dass** jede Lampengruppe ($L_1$, $L_2$, $L_3$) eine Mehrzahl von vorzugsweise 3-12 Lichtquellen ($L_n$) mit unterschiedlicher spektraler Strahlungscharakteristik aufweist, wobei die Lichtquellen in allen drei Lampengruppen gleichartig ausgebildet sind und pro Lampengruppe insgesamt jeweils im Wesentlichen den sichtbaren Spektralbereich abdecken.

3.  Farbmessgerät nach Anspruch 2, **dadurch gekennzeichnet, dass** drei Lichtquellen gleicher Strahlungscharakteristik im Lampenring (11) jeweils um den gleichen Winkel von vorzugsweise 120° winkelversetzt angeordnet sind.

4.  Farbmessgerät nach einem der vorangehenden Ansprüche, **dadurch gekennzeichnet, dass** mindestens eine der Lampengruppen ($L_1$, $L_2$, $L_3$) eine oder mehrere insbesondere im Bereich von 360-400 nm strahlende UV-Lichtquellen aufweist.

5.  Farbmessgerät nach einem der vorangehenden Ansprüche, **dadurch gekennzeichnet, dass** die Lichtquellen ($L_n$) durch vorzugsweise auf einer gemeinsamen Leiterplatte (13) angeordnete Leuchtdioden gebildet sind.

6.  Farbmessgerät nach einem der vorangehenden Ansprüche, **dadurch gekennzeichnet, dass** der bildgebende Sensor (22) monochrom ausgelegt ist und eine örtliche Auflösung von mindestens 100*100 Pixel, vorzugsweise 200*200 bis 640*480 Pixel aufweist.

7.  Farbmessgerät nach einem der vorangehenden Ansprüche, **dadurch gekennzeichnet, dass** die Aufpickanordnung (20) eine dem bildgebenden Sensor (22) vorgesetzte Linse (21) aufweist, welche zusammen mit einem im bildgebenden Sensor (22) vorhandenen Objektiv (22b) ein telezentrisches Abbildungssystem bildet.

8.  Farbmessgerät nach einem der vorangehenden Ansprüche, **dadurch gekennzeichnet, dass** die Elektronikschaltung (200) dazu ausgebildet ist, eine Maskierung (113) der Bilddaten nach vorgegebenen Kriterien durchzuführen, wobei die Bilddaten von solchen Bildpunkten von der weiteren Verarbeitung ausgeschlossen werden, welche die vorgegebenen Kriterien erfüllen, wobei bei der Maskierung (113) die Bilddaten von solchen Bildpunkten von der weiteren Verarbeitung ausgeschlossen werden, welche einen gegenüber den gesamten Bildpunkten des Messfelds oder einer Teilmenge davon um einen Schwellenwert höheren oder niedrigeren Helligkeitswert aufweisen, und/oder bei der Maskierung (113) die Bilddaten von Glanz- oder Schattenpunkten von der weiteren Verarbeitung ausgeschlossen werden.

9.  Farbmessgerät nach einem der vorangehenden Ansprüche, **dadurch gekennzeichnet, dass** die Elektronikschaltung (200) dazu ausgebildet ist, die Bilddaten der Bildpunkte in Farbkoordinaten eines Farbraums umzurechnen und anhand dieser Farbkoordinaten die im Messfeld vorherrschenden Farben zu bestimmen.

10. Farbmessgerät nach Anspruch 9, **dadurch gekennzeichnet, dass** die Elektronikschaltung (200) dazu ausgebildet ist, die Bildpunkte nach Farb-Clustern zu klassifizieren und die vorherrschenden Farben aus den Farb-Clustern zu ermitteln.

**11.** Farbmessgerät nach Anspruch 9 oder 10, **dadurch gekennzeichnet, dass** die Elektronikschaltung (200) dazu ausgebildet ist, die vorherrschenden Farben grafisch und/oder numerisch auf der Anzeige (D) auszugeben.

**12.** Farbmessgerät nach einem der vorangehenden Ansprüche, **dadurch gekennzeichnet, dass** die Elektronikschaltung (200) dazu ausgebildet ist, ein Abbild des Messfelds (MF) grafisch auf der Anzeige darzustellen.

**Claims**

**1.** Colour measuring device with a lighting arrangement (10) for a measurement field (MF) of a measurement object (MO) to be measured, a pick-up arrangement (20) for detecting the measurement light reflected back from the measurement field and for converting it into corresponding electric signals, an electronic circuit (200) for controlling operation of the colour measuring device and processing and evaluating the electric signals, and a display (D) for displaying measurement results, wherein:

the lighting arrangement (10) comprises a lamp ring (11) with at least three lamp groups ($L_1$, $L_2$, $L_3$) mutually offset at an angle about 360°, preferably equidistantly, each with at least one light source ($L_n$) for illuminating the measurement field (MF) from a predefined range of angles of incidence relative to the normal onto the measurement field; the pick-up arrangement (20) comprises a photoelectric converter arrangement in the form of an imaging sensor, in particular a digital camera (22), which generates an image of the measured measurement field (MF) made up of image pixels;

and the electronic circuit (200) is designed to switch on the light sources ($L_n$) of the lamp groups ($L_1$, $L_2$, $L_3$) of the lighting arrangement (10) selectively, and the imaging sensor (22) generates a separate image of the measurement field (MF) for one or more individually switched-on light source(s) ($L_n$) respectively and forwards the measurement values of the individual image pixels associated with different lighting directions to the electronic circuit (200) as image data;

**characterised in that**

the electronic circuit (200) is designed to run a flat correction (114) in order to compensate for interference effects induced by texture, and the spatial orientation of the normal onto the image pixels of the measurement field (MF) relative to a measurement plane (MP) is determined from the measurement values of the different lighting directions, and the spatial orientation is applied as a means of correcting the image data of the image pixels so that they are identical to the image data that would have been measured had the normal onto the relevant image pixels been perpendicular to the measurement plane and the image pixels had lain in the measurement plane.

**2.** Colour measuring device as claimed in claim 1, **characterised in that** every lamp group ($L_1$, $L_2$, $L_3$) comprises a plurality of preferably 3-12 light sources ($L_n$) with differing spectral radiation characteristics, and the light sources in all three lamp groups are of the same type and each lamp group as a whole essentially covers the visible spectral range in each case.

**3.** Colour measuring device as claimed in claim 2, **characterised in that** three light sources with the same radiation characteristics are disposed angularly offset at the same angle of preferably 120° respectively in the lamp ring (11).

**4.** Colour measuring device as claimed in one of the preceding claims, **characterised in that** at least one of the lamp groups ($L_1$, $L_2$, $L_3$) has one or more UV light sources radiating in the range of 360-400 nm in particular.

**5.** Colour measuring device as claimed in one of the preceding claims, **characterised in that** the light sources ($L_n$) are preferably provided in the form of light-emitting diodes disposed on a common circuit board (13).

**6.** Colour measuring device as claimed in one of the preceding claims, **characterised in that** the imaging sensor (22) is of a monochrome design and has a local resolution of at least 100*100 pixels, preferably 200*200 pixels to 640*480 pixels.

**7.** Colour measuring device as claimed in one of the preceding claims, **characterised in that** the pick-up arrangement (20) has a lens (21) disposed in front of the imaging sensor (22), which forms a telecentric imaging system in conjunction with a lens (22b) provided in the imaging sensor (22).

8. Colour measuring device as claimed in one of the preceding claims, **characterised in that** the electronic circuit (200) is designed to run a process of masking (113) the imaging data on the basis of predefined criteria, and the image data of those image pixels which satisfy the predefined criteria are excluded from subsequent processing, and during masking (113), the image data of those image pixels which have a brightness value higher or lower than all of the image pixels of the measurement field or a part-quantity of them by a threshold value are excluded from subsequent processing, and/or during masking (113), the image data of gloss or shadow points is excluded from subsequent processing.

9. Colour measuring device as claimed in one of the preceding claims, **characterised in that** the electronic circuit (200) is designed to re-compute the image data of the image pixels into colour co-ordinates of a colour space and determine the predominant colours in the measurement field on the basis of these colour co-ordinates.

10. Colour measuring device as claimed in claim 9, **characterised in that** the electronic circuit (200) is designed to classify the image pixels on the basis of colour clusters and determine the predominant colours from the colour clusters.

11. Colour measuring device as claimed in claim 9 or 10, **characterised in that** the electronic circuit (200) is designed to output the predominant colours graphically and/or numerically on the display (D).

12. Colour measuring device as claimed in one of the preceding claims, **characterised in that** the electronic circuit (200) is designed to display an image of the measurement field (MF) graphically on the display.

**Revendications**

1. Appareil de mesure de couleur avec un dispositif d'éclairage (10) pour un champ de mesure (MF) à mesurer d'un objet à mesurer (MO), un dispositif de captage (20) pour la captation de la lumière de mesure reflétée par le champ de mesure et pour sa transformation en signaux électriques correspondants, un circuit électronique (200) pour contrôler le fonctionnement de l'appareil de mesure de couleur et pour le traitement et l'exploitation des signaux électriques et un écran (D) pour l'affichage de résultats de mesure :

le dispositif d'éclairage (10) comportant un cercle de lampes (11) avec au moins trois groupes de lampes ($L_1$, $L_2$, $L_3$) décalés angulairement sur 360° de préférence à égale distance l'un de l'autre avec respectivement au moins une source lumineuse ($L_n$) pour illuminer le champ de mesure (MF) avec une plage angulaire d'incidence sur le champ de mesure par rapport à la normale qui est prédéterminée; le dispositif de captage (20) comportant un dispositif de conversion photoélectrique sous forme d'un capteur d'image, notamment d'une caméra numérique (22) qui produit une image du champ de mesure (MF) mesuré composée de pixels ;

le circuit électronique (200) étant configuré pour allumer de manière sélective les sources lumineuses ($L_n$) des groupes de lampes ($L_1$, $L_2$, $L_3$) du dispositif d'éclairage (10), le capteur d'image (22) générant respectivement pour une ou plusieurs source(s) lumineuse(s) ($L_n$) allumée(s) individuellement une image propre du champ de mesure (MF) et transmettant les valeurs mesurées de chaque pixel correspondant à chacune des différentes directions d'éclairage, sous forme de données images au circuit électronique (200) ;

**caractérisé en ce que** :

le circuit électronique (220) est configuré pour procéder à une correction de champ plat (114) afin de compenser des effets de brouillage dus à la texture, l'orientation spatiale de la normale par rapport aux pixels du champ de mesure (MF) étant calculée par rapport à un plan de mesure (MP) à partir des valeurs mesurées des différentes directions d'éclairage et les données image des pixels étant corrigés au moyen de l'orientation spatiale de sorte à ce qu'elles correspondent aux données images qui seraient mesurées si la normale par rapport aux pixels était perpendiculaire au plan de mesure et les pixels situés dans le plan de mesure.

2. Appareil de mesure de couleur selon la revendication 1, **caractérisé en ce que** chaque groupe de lampe ($L_1$, $L_2$, $L_3$) comporte de préférence de 3 à 12 sources lumineuses ($L_n$) ayant des propriétés de rayonnement spectrales différentes, les sources lumineuses étant configurées de la même manière dans chacun des trois groupes de lampes et couvrant pour chaque groupe de lampe respectivement essentiellement l'ensemble du spectre visible.

3. Appareil de mesure de couleur selon la revendication 2, **caractérisé en ce que** trois sources lumineuses ayant les mêmes propriétés de rayonnement dans le cercle de lampes (11) sont disposées respectivement de manière à être décalées angulairement à un même angle de 120 degrés, de préférence.

4. Appareil de mesure de couleur selon l'une quelconque des revendications précédentes, **caractérisé en ce qu'**au moins un des groupes de lampes ($L_1$, $L_2$, $L_3$) comporte une ou plusieurs sources lumineuses émettant des rayons UV notamment dans la zone des 360 - 400 nm.

5. Appareil de mesure de couleur selon l'une quelconque des revendications précédentes, **caractérisé en ce que** les sources lumineuses ($L_n$) sont formées de préférence par des diodes luminescentes disposées sur un circuit imprimé (13) commun.

6. Appareil de mesure de couleur selon l'une quelconque des revendications précédentes, **caractérisé en ce que** le capteur d'image (22) est monochrome et comporte une résolution locale d'au moins 100*100 pixels, de préférence entre 200*200 pixels et 640*480 pixels.

7. Appareil de mesure de couleur selon l'une quelconque des revendications précédentes, **caractérisé en ce que** le dispositif de captage (20) comporte une lentille (21) avancée par rapport au capteur d'images (22) qui forme avec un objectif (22b) présent dans le capteur d'images (22) un système télécentrique de formation d'image.

8. Appareil de mesure de couleur selon l'une quelconque des revendications précédentes, **caractérisé en ce que** le circuit électronique (200) est configuré pour masquer (113) les données images selon des critères prédéfinis, les données images de pixels correspondant aux critères prédéfinis étant exclus de la suite du traitement, le masquage (113) des données images excluant de la suite du traitement les données images de pixels qui comportent une valeur de luminosité supérieure ou inférieure d'une valeur seuil par rapport à l'ensemble ou à une partie des pixels du champ de mesure et/ou le masquage (113) excluant de la suite du traitement les données images de points lumineux ou de points d'ombre.

9. Appareil de mesure de couleur selon l'une quelconque des revendications précédentes, **caractérisé en ce que** le circuit électronique (200) est configuré pour convertir les données images des pixels en coordonnées de couleurs d'un espace de couleur et pour déterminer les couleurs prédominantes du champ de mesure au moyen de ces coordonnées de couleurs.

10. Appareil de mesure de couleur selon l'une quelconque des revendications précédentes, **caractérisé en ce que** le circuit électronique (200) est configuré pour classer les pixels par clusters de couleurs et pour déterminer les couleurs prédominantes de ces clusters de couleurs.

11. Appareil de mesure de couleur selon l'une quelconque des revendications précédentes, **caractérisé en ce que** le circuit électronique (200) est configuré pour afficher graphiquement et/ou numériquement les couleurs prédominantes sur l'écran (D).

12. Appareil de mesure de couleur selon l'une quelconque des revendications précédentes, **caractérisé en ce que** le circuit électronique (200) est configuré pour afficher graphiquement une représentation du champ de mesure (MF) sur l'écran.

**Fig. 2**

**Fig. 1**

**Fig. 3**

**Fig. 4**

**Fig. 5**

**Fig. 6**

**Fig. 7**

21

12

**Fig. 8**

D

T

20

200

G

100

10

F

W

P

P'

**Fig. 9**

G

F

P

**Fig. 10**

**Fig. 11**

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1707928 A

- WO 0073737 A